(19) 

Europäisches Patentamt

European Patent Office

Office européen des brevets

(11) **EP 4 495 622 A1**

(12) **EUROPEAN PATENT APPLICATION**
published in accordance with Art. 153(4) EPC

(43) Date of publication:
**22.01.2025 Bulletin 2025/04**

(21) Application number: **22937978.9**

(22) Date of filing: **22.04.2022**

(51) International Patent Classification (IPC):
*G01S 7/481* (2006.01)

(52) Cooperative Patent Classification (CPC):
**G01S 7/481**

(86) International application number:
**PCT/CN2022/088616**

(87) International publication number:
**WO 2023/201742 (26.10.2023 Gazette 2023/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Shenzhen Yinwang Intelligent Technologies Co., Ltd.
Shenzhen, Guangdong 518129 (CN)**

(72) Inventor: **WANG, Chao
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **SCANNING METHOD, DETECTION DEVICE, AND TERMINAL**

(57)     Embodiments of this application provide a scanning method, a detection apparatus, and a terminal, which may be applied to the fields such as detection, intelligent surveying and mapping, and intelligent driving. The method includes: generating N optical signals, where the optical signal includes M channels, and M is an integer and M > 0; and adjusting a scanning module to change a propagation direction of the N optical signals, where the N optical signals correspond to N sub-region groups in a field-of-view range, and center locations of the N sub-region groups are sequentially spaced by a first angle in a first direction. One sub-region group includes M sub-regions, the M sub-regions correspond to the M channels, a pointing angle of one sub-region group in the first direction is a second angle, and the second angle is greater than the first angle. In embodiments of this application, the N sub-region groups sequentially overlap, and an overlapping region is a region close to the middle of the field-of-view range. This is equivalent to performing detection on a middle region of the field-of-view range a plurality of times, to increase a resolution of the middle region of the field-of-view range, and improve detection precision for the middle region of the field-of-view range.

```
┌─────────────────────────────────────────────────────────────┐
│  S201: A detection apparatus generates N optical signals      │
└─────────────────────────────────────────────────────────────┘
                              │
┌─────────────────────────────────────────────────────────────┐
│  S202: The detection apparatus adjusts a scanning module to   │
│  change a propagation direction of the N optical signals      │
└─────────────────────────────────────────────────────────────┘
```

FIG. 2

EP 4 495 622 A1

## Description

## TECHNICAL FIELD

This application relates to the field of optical detection technologies, and in particular, to a scanning method, a detection apparatus, and a terminal.

## BACKGROUND

A lidar (Lidar) is a ranging apparatus that combines a laser technology with a photoelectric conversion technology. A basic working principle of the lidar is as follows: A transmitting end of the lidar transmits laser light to a detection region, a receiving end of the lidar receives an optical signal returned from the detection region, and information about the detection region is determined by measuring round-trip time of the optical signal.

With the development of information technologies and computer vision, a requirement on a sensing result is increasingly high, and a requirement on detection precision of the lidar is also increasing. When detecting a target in a full field-of-view range, a current lidar consumes a large quantity of detection resources for a target of uninterest. Consequently, there is a large amount of ineffective information in a detection result, and a requirement of a user on the detection precision cannot be met.

How to improve the detection precision of the lidar is a hot topic that is being studied by a person skilled in the art.

## SUMMARY

Embodiments of this application provide a scanning method, a detection apparatus, and a terminal, to improve a resolution of a middle region of a field-of-view range and improve detection precision.

According to a first aspect, an embodiment of this application provides a scanning method, including:

generating N optical signals, where the optical signal includes M channels, N is an integer and N > 1, and M is an integer and M > 0; and
adjusting a scanning module to change a propagation direction of the N optical signals, where the N optical signals are obtained through N times of transmission, the N optical signals correspond to N sub-region groups in a field-of-view range, center locations of the N sub-region groups are sequentially spaced by a first angle in a first direction, and the N sub-region groups have a same location in a second direction, where
one sub-region group includes M sub-regions, the M sub-regions correspond to the M channels, a pointing angle of one sub-region group in the first direction is a second angle, and the second angle is greater than the first angle.

Optionally, the foregoing method may be applied to a detection apparatus.

In embodiments of this application, because the second angle is greater than the first angle, the N sub-region groups sequentially overlap, and an overlapping region is a region close to the middle of the field-of-view range. This is equivalent to performing detection on a middle region of the field-of-view range a plurality of times, to increase a resolution of the middle region of the field-of-view range, and improve detection precision for the middle region of the field-of-view range.

It may be learned in daily life that, when human eyes observe a target, a target in the middle region is observed more carefully than a target in an edge region. Therefore, the middle region of the field-of-view range can be naturally used as an ROI of the human eyes. However, in embodiments of this application, because the sub-region groups formed by all the optical signals overlap in the region close to the middle of the field-of-view range, the detection apparatus consumes more resources in the middle region of the field-of-view range. The middle region of the field-of-view range is scanned by a plurality of optical signals. Therefore, in the technical solutions in embodiments of this application, the detection apparatus focuses on the middle region of the field-of-view range, so that the detection apparatus implements a gaze function similar to that of the human eyes, and the detection apparatus has an intelligent attribute.

Embodiments of this application may be applied to scenarios such as vehicle sensing, intelligent driving, surveying and mapping, and robot sensing. The vehicle sensing scenario is used as an example. For a detection apparatus configured in a vehicle, a region above a field-of-view range of the detection apparatus is usually the sky, and a region below the field-of-view range is usually a traveling road. Therefore, a middle region of the field-of-view range is usually an ROI (including a preceding vehicle, a neighboring vehicle, a pedestrian, or the like) in a traveling process of the vehicle. However, in embodiments of this application, a resolution of the region of interest is improved, detection precision for the middle region is improved, and effectiveness of detection information is improved, to improve driving safety of the vehicle. Especially, for an intelligent driving system, a higher resolution of a ROI is more conducive to calculation and decision-making of the intelligent driving system, to improve safety and comfort of the intelligent driving system.

In another possible implementation of the first aspect, in the N sub-region groups an angle of an overlapping region between a first sub-region group and a next adjacent sub-region group is a difference between the second angle and the first angle. Because an angle corresponding to the sub-region group is greater than an interval between sub-regions, an overlapping part between adjacent sub-regions is the difference between the second angle and the first angle. The overlapping part is equivalently detected a plurality of times, and this improves a resolution of a detection result.

In still another possible implementation of the first aspect, the N sub-region groups overlap in the field-of-view range, and an angle of an overlapping region between an $i^{th}$ sub-region group and an $(i+j)^{th}$ sub-region group in the N sub-region groups is a difference between the second angle and the first angle multiplied by j, where i and j are integers, $0 < j < M$, $0 < i < N$, and $i + j \leq N$. Because the sub-region group is formed through scanning of a plurality of channels, one sub-region may overlap (M-1) sub-regions following the sub-region. However, the sub-regions are sequentially arranged, so that quantities of overlapping times sequentially increase from an edge of the field-of-view range to the middle of the field-of-view range. Therefore, M-fold densification is implemented for the middle region of the field-of-view range, and the resolution of the middle region of the field-of-view range is greatly increased. In addition, in this application, a region whose resolution is improved is related to a quantity of channels, a channel pointing angle, and a quantity of optical signals. Therefore, required resolution distribution can be designed based on the quantity of channels, the channel pointing angle, and the quantity of optical signals, to better meet a user requirement.

In still another possible implementation of the first aspect, in the first direction, a resolution within the field-of-view range increases in ascending order from the edge to the middle. In this application, gradient control of the resolution is implemented, and resolution distribution similar to that of human eye visual observation is formed. This meets a requirement on detection precision in the fields such as autonomous driving and intelligent surveying and mapping.

In still another possible implementation of the first aspect, in the first direction, the resolution of the middle region within the field-of-view range is M-fold a resolution of an edge portion of the field-of-view range. In this way, detection precision for the middle region of the field-of-view range is greatly improved, and energy utilization and system resource utilization are improved.

In still another possible implementation of the first aspect, in the first direction, an optical signal pointing angle of each of the M channels is a third angle, and the third angle is the same as the first angle. In this case, the interval between the sub-regions is exactly consistent with an included angle between the channels. When the optical signal is received, locations of sub-regions in one sub-region group are consecutive, so that an error that occurs during combination of a field of view when the signal is received can be reduced, and detection precision can be improved.

In still another possible implementation of the first aspect, in the first direction, an optical signal pointing angle of each of the M channels is a third angle, and the third angle satisfies:

The third angle = the first angle + β, where β > 0°. Because there is a difference of β between a pointing angle between the channels and the first angle, two times of scanning in the overlapping region are interleaved, to increase point cloud density and improve a resolution of the overlapping region.

In still another possible implementation of the first aspect, a signal of one channel in one optical signal forms K scanning lines in one sub-region, and an angle of each of the K scanning lines in the first direction is a fourth angle, where K is an integer, and K > 0. The first angle = K × the fourth angle. Optionally, all the K scanning lines have a same location in the second direction.

In embodiments of this application, one signal can form K scanning lines. Because the scanning lines have the same location in the second direction and are spaced by a same angle in the first direction, a region formed through scanning has a regular shape. This reduces complexity of field-of-view combination, and improves detection precision.

In a possible implementation of the first aspect, a signal of one channel in one optical signal forms K scanning lines in one sub-region. In the first direction, a scanning form of a $1^{st}$ scanning line of a $1^{st}$ optical signal in the N optical signals is accelerated scanning followed by decelerated scanning. A scanning form of a $K^{th}$ scanning line of an $N^{th}$ optical signal in the N optical signals is accelerated scanning followed by decelerated scanning. A scanning form of a $2^{nd}$ scanning line to a $K^{th}$ scanning line of the $1^{st}$ optical signal is constant-speed scanning, a scanning form of a $2^{nd}$ optical signal to an $(N-1)^{th}$ optical signal in the N optical signals is constant-speed scanning, and a scanning form of a $1^{st}$ scanning line to a $(K-1)^{th}$ scanning line of the $N^{th}$ optical signal in the N optical signals is constant-speed scanning.

In the foregoing implementation, on both the $1^{st}$ scanning line and a last scanning line in the field-of-view range, scanning is performed in a form of acceleration followed by deceleration. To be specific, on the $1^{st}$ scanning line and the last scanning line, time spent in scanning a same angle is the same as time spent in scanning on another scanning line, and an expected speed is reached after scanning on one scanning line is completed. This facilitates performing scanning in a next field-of-view range and improving detection efficiency.

For example, at the last scanning line, the scanning module may need to flip or stop (to facilitate performing scanning in the next field-of-view range), that is, a target speed Vt is 0, and an initial speed V0 of the scanning module is v. A scanning speed needs to decrease from v to 0, but the time spent in scanning the same angle needs to be consistent. Therefore, scanning is performed in the form of acceleration followed by deceleration, so that the scanning time is consistent and an angle scanned within same time is consistent, to improve detection efficiency.

In addition, constant-speed scanning is performed in the second direction, and most scanning lines still perform constant-speed scanning in the first direction. This solves problems of a limited quantity of field-of-views for combination, angle jump (jump), and speed stability in a scanning system.

In still another possible implementation of the first aspect, the method further includes:

receiving N return signals, where each return signal includes a reflected signal corresponding to one optical signal; and

performing field-of-view combination based on the N return signals, to obtain detection data of the field-of-view range. Because scanning signals overlap in the middle region of the field-of-view range, correspondingly, sub-region groups corresponding to the return signals also overlap in the middle region of the field-of-view range. In the obtained detection data, point cloud density of the middle region of the field-of-view range is higher than point cloud density of the edge region of the field-of-view range. This improves detection accuracy of a sub-region in the middle of a detection region and improves detection performance.

In still another possible implementation of the first aspect, the N optical signals include a first optical signal.

A transmission delay of the first optical signal is first duration, the transmission delay is an offset between time at which a light source transmits an optical signal and a preset light emitting moment, and the first duration satisfies:

the first duration = $P \times 1/PRF$, where PRF is a pulse repetition frequency of the detection apparatus, P is a delay coefficient, and a value range of P is (0, 1]; or the first duration is 0.

The transmission delay can be adjusted by using the delay coefficient P, to implement designs of different resolutions for different regions. For example, different values of P are designed in different optical signals, so that scanning lines of different channels are staggered, to further improve a resolution and detection precision.

According to a second aspect, an embodiment of this application provides a detection apparatus. The detection apparatus includes a light source and a scanning module.

The light source is configured to generate N optical signals, where the optical signal includes M channels, N is an integer and N > 1, and M is an integer and M > 0.

The scanning module is configured to change a propagation direction of the N optical signals, where the N optical signals are obtained through N times of transmission, the N optical signals correspond to N sub-region groups in a field-of-view range, center locations of the N sub-region groups are sequentially spaced by a first angle in a first direction, and the N sub-region groups have a same location in a second direction.

One sub-region group includes M sub-regions, the M sub-regions correspond to the M channels, a pointing angle of one sub-region group in the first direction is a second angle, and the second angle is greater than the first angle.

In a possible implementation of the second aspect, in the N sub-region groups, an angle of an overlapping region between a first sub-region group and a next adjacent sub-region group is a difference between the second angle and the first angle.

In another possible implementation of the second aspect, the N sub-region groups overlap in the field-of-view range, and an angle of an overlapping region between an $i^{th}$ sub-region group and an $(i+j)^{th}$ sub-region group in the N sub-region groups is a difference between the second angle and the first angle multiplied by j, where i and j are integers, 0 < j < M, 0 < i < N, and i + j ≤ N.

In still another possible implementation of the second aspect, in the first direction, a resolution of a middle region within the field-of-view range is M-fold a resolution of an edge portion of the field-of-view range.

In still another possible implementation of the second aspect, in the first direction, an optical signal pointing angle of each of the M channels is a third angle, and the third angle is the same as the first angle.

In still another possible implementation of the second aspect, in the first direction, an optical signal pointing angle of each of the M channels is a third angle, and the third angle satisfies:

the third angle = the first angle + $\beta$, where $\beta > 0°$.

In still another possible implementation of the second aspect, a signal of one channel in one optical signal forms K scanning lines in one sub-region, an angle of each of the K scanning lines in the first direction is a fourth angle, and all the K scanning lines have a same location in the second direction, where K is an integer, and K > 0.

In still another possible implementation of the second aspect, a signal of one channel in one optical signal forms K scanning lines in one sub-region. In the first direction, a scanning form of a $1^{st}$ scanning line of a $1^{st}$ optical signal in the N optical signals is accelerated scanning followed by decelerated scanning. A scanning form of a $K^{th}$ scanning line of an $N^{th}$ optical signal in the N optical signals is accelerated scanning followed by decelerated scanning. A scanning form of a $2^{nd}$ scanning line to a $K^{th}$ scanning line of the $1^{st}$ optical signal is constant-speed scanning, a scanning form of a $2^{nd}$ optical signal to an $(N-1)^{th}$ optical signal in the N optical signals is constant-speed scanning, and a scanning form of a $1^{st}$ scanning line to a $(K-1)^{th}$ scanning line of the $N^{th}$ optical signal in the N optical signals is constant-speed scanning.

In still another possible implementation of the second aspect, the method further includes:

receiving N return signals, where each return signal includes a reflected signal corresponding to one optical signal; and

performing field-of-view combination based on the N return signals, to obtain detection data of the field-of-view range.

In still another possible implementation of the second aspect, the N optical signals include a first optical signal.

A transmission delay of the first optical signal is first duration, and the transmission delay is an offset between time at which the light source transmits an optical signal and a preset light emitting moment; and the first duration satisfies:

the first duration = P × 1/PRF, where PRF is a pulse repetition frequency of the detection apparatus, P is a delay coefficient, and a value range of P is (0, 1]; or the first duration is 0.

According to a third aspect, an embodiment of this application provides a lidar. The lidar includes a transmitting module, a scanning module, a receiving module, and a control module. The transmitting module is configured to generate N optical signals, the receiving module is configured to receive a return optical signal (including a return signal). The control module is configured to control the scanning module, so that the lidar implements the method according to any one of the first aspect.

According to a fourth aspect, an embodiment of this application provides a terminal. The terminal includes the detection apparatus according to any one of the second aspect, or includes the lidar shown in the third aspect.

Optionally, the terminal may include a mobile platform or a transportation tool like a vehicle, a ship, an airplane, a train, a spacecraft, an uncrewed aerial vehicle, or a robot.

For beneficial effects of the technical solutions provided in the second aspect to the fourth aspect of this application, refer to the beneficial effects of the technical solutions in the first aspect. Details are not described herein again.

**BRIEF DESCRIPTION OF DRAWINGS**

The following briefly describes accompanying drawings used in descriptions of embodiments.

FIG. 1 is a diagram of an architecture of a detection apparatus according to an embodiment of this application;
FIG. 2 is a schematic flowchart of a scanning method according to an embodiment of this application;
FIG. 3 is a diagram of signals of a plurality of channels according to an embodiment of this application;
FIG. 4 is a diagram of sub-region groups corresponding to a plurality of optical signals according to an embodiment of this application;
FIG. 5A is a diagram of a field-of-view range of a detection apparatus according to an embodiment of this application;
FIG. 5B is a diagram of a scanning result of a detection apparatus according to an embodiment of this application;
FIG. 6 is a diagram of distribution of sub-region groups in a field-of-view range according to an embodiment of this application;
FIG. 7A is a diagram of a scanning pattern according to an embodiment of this application;
FIG. 7B is a diagram of scanning pattern interleaving according to an embodiment of this application;
FIG. 8 is a diagram of a scanning pattern of an optical signal including four channels according to an embodiment of this application;
FIG. 9 is a diagram of a scanning line according to an embodiment of this application;
FIG. 10 is a diagram of a scanning speed change according to an embodiment of this application;
FIG. 11 shows a speed curve, an acceleration curve, and a displacement curve in a first direction according to an embodiment of this application; and
FIG. 12 is a diagram of a structure of a terminal according to an embodiment of this application.

**DESCRIPTION OF EMBODIMENTS**

To make objectives, technical solutions, and advantages of embodiments of this application clearer, the following further describes embodiments of this application in detail with reference to the accompanying drawings.

For ease of understanding, some concepts related to embodiments of this application are described for reference by using examples below. Details are as follows.

1. Detection apparatus

The detection apparatus mentioned in embodiments of this application may be a lidar, or may be another optical detection apparatus, for example, a combined detection apparatus (for example, a detection apparatus that integrates a radar detector and an image sensor). An operating principle of the detection apparatus is to detect a corresponding detection region by transmitting an optical signal and receiving a returned optical signal.

The detection apparatus in embodiments of this application can be used in various fields such as intelligent driving, intelligent transportation, intelligent manufacturing, environment detection, surveying and mapping, and uncrewed aerial vehicles, and can implement one or more functions of target detection, distance measurement, speed measurement, target tracking, imaging recognition, and the like.

The detection apparatus in embodiments of this application may be used in an in-vehicle detection apparatus (for example, an in-vehicle radar), a roadside detection apparatus (for example, an intersection radar), or the like, or may be used in another detection apparatus, for example, a detection apparatus installed on an apparatus like an uncrewed aerial vehicle, a robot, a rail vehicle, a bicycle, a signal light, a speed measurement apparatus, or a base station. An installation location of the detection apparatus is not limited in this application.

2. Region of interest (region of interest, ROI)

The ROI is a key region that needs to be focused on. The ROI is used to determine a region that needs to be focused on in an image, to reduce processing time and improve precision.

For example, the ROI is a region that needs to be focused on and whose outline is usually drawn by using a box, a circle, an ellipse, or an irregular polygon.

3. Scanning

Scanning may include mechanical scanning, electrical scanning, and the like. Mechanical scanning means that scanning is performed on a field-of-view range via an inertial scanning device. For example, 2D scanning is used as an example. 2D mechanical scanning may be implemented via a 2D scanning components, or may be implemented via a combination of two 1D scanning components. Electrical scanning means completing scanning on the field-of-view range by implementing free control of space energy emission of a semiconductor device by adjusting physical parameters such as a voltage, a current, and a frequency, including in a form of point, row, column, region, or customized scanning, or the like.

4. Field-of-view range

The field-of-view range is a range that can be detected by a detection apparatus, and is also referred to as a field of vision or a field of view (field of view, FOV). In some scenarios, a line of sight (line of sight, LOS) region in which signal (for example, a radio wave or laser light) transmission is not interrupted is needed between a transmitting end of the detection apparatus and a target object or between a receiving end of the detection apparatus and a target object. The line of sight region may be understood as the field-of-view range.

The following describes a system architecture in embodiments of this application. It should be noted that the system architecture and a service scenario described in this application are intended to describe technical solutions in this application more clearly, and do not constitute a limitation on the technical solutions provided in this application. It should be understood that, with evolution of the system architecture and emergence of a new service scenario, the technical solutions provided in this application are also applicable to similar technical problems.

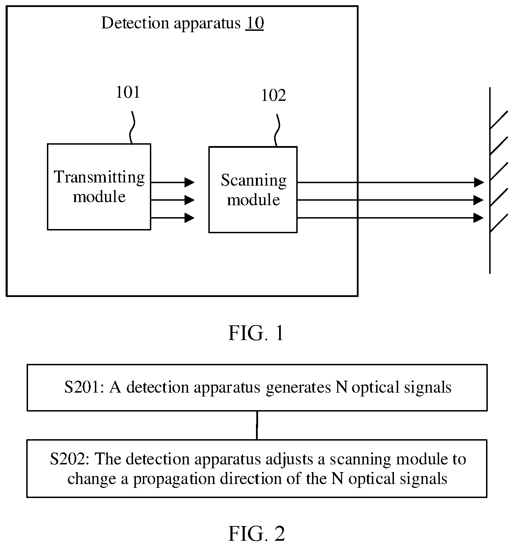

An architecture of a detection apparatus 10 provided in an embodiment of this application is shown in FIG. 1, and includes a transmitting module 101 and a scanning module 102.

(1) The transmitting module 101 includes a light source, and the light source is configured to generate an optical signal. The light source may include a laser that may generate infrared light, ultraviolet light, visible light, or an optical signal of another wavelength. In some possible implementations, the transmitting module 101 may include one or more of the following light-emitting elements: lasers such as a semiconductor laser, a fiber laser, or a gas laser. The semiconductor laser may specifically include light-emitting elements such as a laser diode (laser diode, LD), a vertical-cavity surface-emitting laser (Vertical-Cavity Surface-Emitting Laser, VCSEL), an edge-emitting laser (edge-emitting laser, EEL), a distributed feedback laser (distributed feedback LD, DFB-LD), a distributed Bragg reflector laser (distributed Bragg reflection LD, DBR-LD), a grating coupled sampled reflector laser (Grating coupled sampling reflection LD, GCSR-LD), and a micro-opto-electro-mechanical system laser (micro-opto-electro-mechanical system LD, MOEMS-LD).

In this embodiment of this application, the optical signal generated by the transmitting module 101 includes signals of a plurality of channels. For ease of description, an example in which a quantity of channels is M is used for description in embodiments of this application, where M is an integer and M > 0. It should be understood that, in some scenarios, the optical signal generated by the transmitting module 101 is also referred to as a transmitting signal, an output optical signal, an output light beam, a radar signal, or the like. For ease of description, the optical signal is collectively referred to as an optical signal in embodiments of this application.

(2) The scanning module 102 is configured to change a propagation direction of light. For example, the scanning module 102 may change a propagation direction of the optical signal from the light source, and/or the scanning module 102 may change a propagation direction of an optical signal from a detection region. The scanning module may include a mechanical scanning component, an electrical scanning component, or the like. In a possible implementation, the scanning module 102 may include one or more of the following optical elements: a mirror reflector, a lens, a spectroscope, a seesaw mirror, a polygon (Polygon) mirror, a micro-electro-mechanical system (Micro-Electro-Mechanical System, MEMS) mirror, and the like.

(3) Optionally, the detection apparatus 10 may further include a receiving module (not shown in the figure). The receiving module is configured to receive an optical signal. Further, the receiving module may obtain an electrical signal based on the optical signal. Optionally, the electrical signal may be output as detection data, or detection data is obtained by processing the electrical signal and then is output.

The receiving module may include one or more detection elements. For example, the receiving module may include one or more of the following detection elements: at least one detection element of a single-photon avalanche diode (single-photon avalanche diode, SPAD), a silicon photomultiplier (Silicon photomultiplier, SiPM), a semiconductor avalanche photodiode (avalanche photodetector, APD), a multi-pixel photon counter (multi-pixel photon counter, MPPC), an electron multiplying charge-coupled device (electron multiplying charge-coupled device, EMCCD), or the like.

When the receiving module includes a plurality of detection elements, the plurality of detection elements may be arranged in an array, for example, arranged in a form of a linear array or a plane array (optionally, having an addressing read function). In a possible solution, the receiving module may include an array detection element with a specification like a $1 \times 2$ array, a $2 \times 3$ array, or a $3 \times 3$ array. A quantity of rows and a quantity of columns arranged in an array are not limited in this application.

(4) Optionally, the detection apparatus 10 may further include a control module (not shown in the figure), and the control module is configured to control one or more of the transmitting module, the scanning module, the control module, and the like.

(5) Optionally, the detection apparatus 10 may further include one or more optical elements, for example, a shaping component (for example, a collimation apparatus or an optical path shaping component), a mirror reflector, a lens, a polarizer, a filter, or a diffuser. In the detection apparatus in embodiments of this application, a quantity, placement locations, a placement sequence, sizes, and the like of optical elements in the detection apparatus are not limited.

In a possible design, an optical system (including one or more optical elements) included in the detection apparatus can enable an echo signal of the transmitting signal to be received, identified, processed, or output by a corresponding region of the receiving module. Optionally, the optical system included in the detection apparatus may be a coaxial optical system, or may be an off-axis optical system.

It should be understood that quantities and installation locations of transmitting modules, receiving modules, optical elements, and the like are not limited in embodiments of this application. FIG. 1 shows merely a possible case for ease of description, and is not intended to limit the detection apparatus 10.

In this embodiment of this application, the detection apparatus adjusts the scanning module, to change a propagation direction of N optical signals. The N optical signals herein are obtained through N times of transmission. In a field-of-view range, the N optical signals respectively correspond to N sub-region groups, center locations of the N sub-region groups are sequentially spaced by a first angle in a first direction, and the N sub-region groups have a same location in a second direction. One sub-region group includes M sub-regions. In this case, the M sub-regions correspond to M channels, a pointing angle of one sub-region group in the first direction is a second angle, and the second angle is greater than the first angle.

It should be noted that, in embodiments of this application, an example in which a quantity of optical signals is N is used for description, where N is an integer and N > 0.

The following describes the technical solutions in embodiments of this application in detail with reference to the accompanying drawings.

FIG. 2 is a schematic flowchart of a scanning method according to an embodiment of this application. Optionally, the scanning method may be applied to the detection system shown in FIG. 1. The scanning method includes step S201 and step S202, which are specifically as follows.

Step S201: A detection apparatus generates N optical signals.

Specifically, each optical signal may include a plurality of channels.

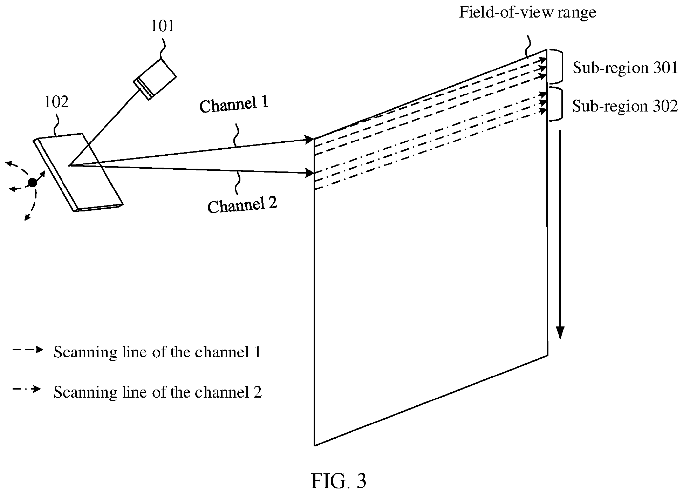

FIG. 3 is a possible diagram of signals of a plurality of channels according to an embodiment of this application. An optical signal transmitted by a transmitting module 101 includes signals of two channels (a quantity of channels shown in FIG. 3 is merely an example), which are respectively a channel 1 and a channel 2. Optionally, there may be an angle relationship (namely, a pointing angle between the channels) between a signal of one channel and a signal of the other channel, or the signals may be independent of each other. In FIG. 3, a scanning process is described by using an example in which the signals of the plurality of channels maintain a fixed pointing angle. In a specific implementation process, the pointing angle may change.

The optical signal is obtained through transmission. For ease of description, in this application, a signal obtained through one time of transmission is referred to as one optical signal. Correspondingly, the N optical signals are obtained through N times of transmission. It should be noted that an implementation of how the transmitting module obtains an optical signal including M channels is not limited in embodiments of this application. For example, the transmitting module may include M light sources, and the M light sources separately emit light, to generate the optical signal including the M channels. For another example, the transmitting module may include less than M light sources, and generate the optical signal including the M channels via an optical splitting apparatus (for example, a spectroscope).

In a possible design, the detection apparatus performs detection in a form of a frame (frame), and one frame includes a plurality of subframes (subframes). In this case, an optical signal transmitted by the transmitting module in one subframe is considered as one optical signal. Specifically, one frame is time for the detection apparatus to complete scanning a field-of-view range once. For example, the detection apparatus scans the field-of-view range by using the optical signal, one optical signal scans one angle range, and time spent in scanning the field-of-view range by using the N optical signals is referred to as one frame. It should be understood that point cloud data obtained through one frame of detection is also referred to as one frame of point cloud.

In a possible solution, the subframe is obtained by dividing the frame. For example, one frame is divided into 20 subframes, and a signal transmitted in each subframe is referred to as one optical signal. Optionally, the subframe may be obtained through even or uneven division, which is subject to a specific implementation situation.

Step S202: A scanning module changes a propagation direction of the N optical signals.

The propagation direction of the optical signals may be changed. After passing through the scanning module, the optical signals fall within the field-of-view range at various angles, to implement scanning of the field-of-view range.

First, one optical signal corresponds to one sub-region group in the field-of-view range, and one sub-region group includes M sub-regions. The M sub-regions herein are formed through scanning of the signals of the M channels separately. As shown in FIG. 3, the channel 1 corresponds to a sub-region 301, and the channel 2 corresponds to a sub-region 302.

A pointing angle of one sub-region group in a first direction is a second angle. As shown in FIG. 3, one sub-region group includes the sub-region 301 and the sub-region 302, and a pointing angle of the sub-region group is a pointing angle, in the first direction, of a region formed by both the sub-region 301 and the sub-region 302. It should be understood that the first direction and a second direction in embodiments of this application are intended to describe different directions. Optionally, the second direction is perpendicular to the first direction. For example, the first direction is a vertical direction (or a horizontal direction), and the second direction may be correspondingly a horizontal direction (or a vertical direction).

Then, the N optical signals correspond to N sub-region groups within the field-of-view range, the N sub-region groups have a same location in the second direction, and center locations of the N sub-region groups are sequentially spaced by a first angle. The pointing angle (namely, the second angle) of the sub-region group in the first direction is greater than the first angle.

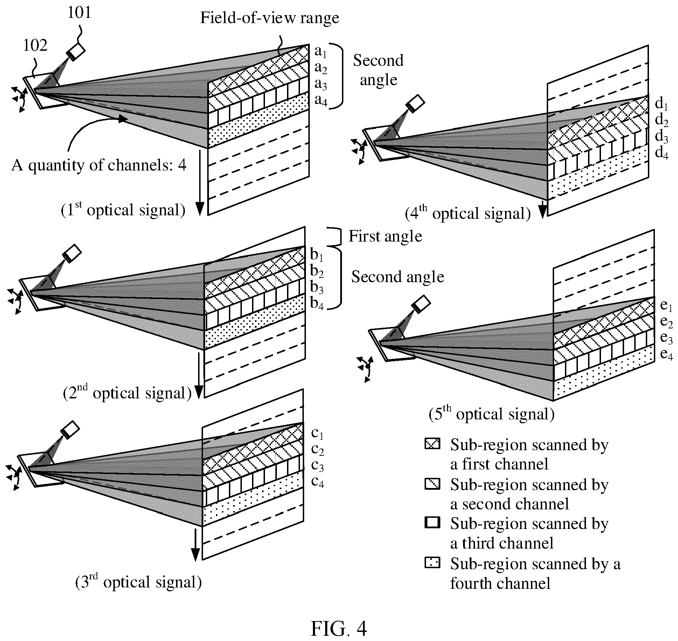

For example, FIG. 4 is a possible diagram of sub-region groups corresponding to a plurality of optical signals according to an embodiment of this application. An optical signal transmitted by the transmitting module 101 includes four channels (a quantity of channels is merely an example), and signals of the four channels perform scanning in the field-of-view range via the scanning module 102. A 1st optical signal corresponds to a 1st sub-region group, and a first sub-region group includes four sub-regions: a1, a2, a3, and a4. Similarly, a sub-region group corresponding to a 2nd optical signal includes sub-regions b1, b2, b3, and b4, a sub-region group corresponding to a 3rd optical signal includes sub-regions c1, c2, c3, and c4, a sub-region group corresponding to a 4th optical signal includes sub-regions d1, d2, d3, and d4, and a sub-region group corresponding to the 3rd optical signal includes sub-regions e1, e2, e3, and e4.

As shown in FIG. 4, a plurality of sub-region groups has a same location in the horizontal direction. In other words, the plurality of sub-region groups have a same field of view in the horizontal direction. Center locations of a plurality of sub-regions are sequentially spaced by the first angle in the vertical direction. Alternatively, an interval between reference points of a plurality of sub-regions is the first angle.

A second angle is greater than the first angle, that is, a pointing angle of the sub-region group in the vertical direction is greater than an interval between the sub-region groups. Therefore, there is an overlapping region between adjacent sub-region groups. The overlapping region is equivalently scanned by signals of different channels a plurality of times. For example, there is an overlapping region between a2 in the 1st sub-region group and b1 in a 2nd sub-region group. The overlapping region between a2 and b1 is scanned two times by two optical signals. To be specific, during scanning by the 1st optical signal, the overlapping region is scanned by a signal of a 2nd channel; and during scanning by the 2nd optical signal, the overlapping region is scanned by a signal of a 1st channel.

In conclusion, in embodiments of this application, the N sub-region groups corresponding to the N optical signals sequentially overlap, and an overlapping region is a region close to the middle of the field-of-view range. This is equivalent to performing detection on a middle region of the field-of-view range a plurality of times, to increase a resolution of the middle region of the field-of-view range, and improve detection precision for the middle region of the field-of-view range.

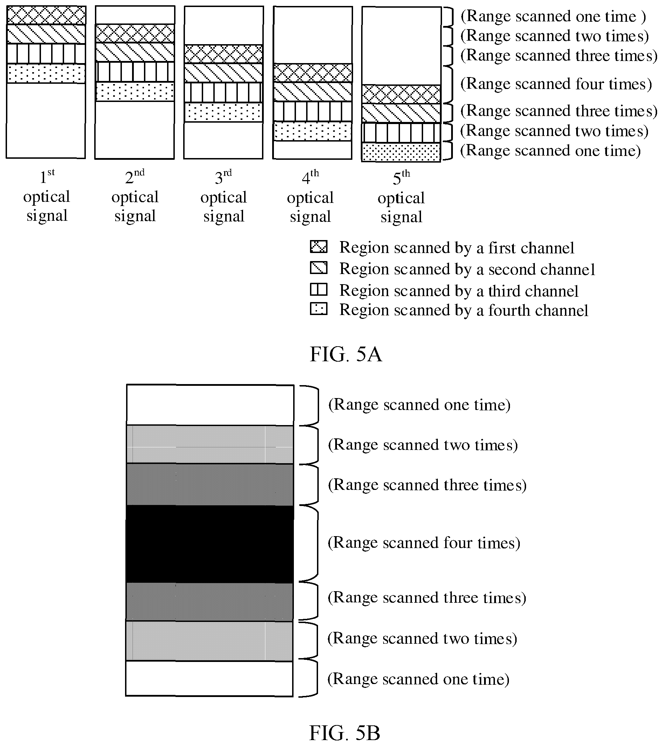

FIG. 5A is a possible diagram of the field-of-view range of the detection apparatus according to an embodiment of this application. Because the optical signal includes the M channels, when the field-of-view range is scanned by the N optical signals, sub-region groups formed by the M channels are sequentially arranged at intervals in the first direction, so that the middle region of the field-of-view range may be separately scanned by the signals of the plurality of channels. It can be learned from FIG. 4 and FIG. 5A that the middle region of the field-of-view range may be separately scanned by the signals of the M channels (that is, the middle region of the field-of-view range is scanned M times), and a resolution of the middle region of the field-of-view range is M-fold a resolution of an edge portion of the field-of-view range.

FIG. 5B is a diagram of a scanning result according to an embodiment of this application. It can be learned that an example in which M = 4 is used, and the middle region of the field-of-view range may be scanned four times, to implement densification with a fourfold resolution. In addition, in the field-of-view range, resolution densification degrees sequentially increase from the edge region of the field-of-view range to the middle region of the field-of-view range, and resolutions are evenly distributed. As shown in FIG. 5A and FIG. 5B, for the optical signal including the four channels, sub-regions are scanned four times, three times, two times, and one time separately from the middle region of the field-of-view range to an edge of the field-of-view range. Correspondingly, the resolution densification degrees are fourfold, threefold, twofold, and onefold in sequence.

It may be learned in daily life that, when human eyes observe a target, a target in the middle region is observed more carefully than a target in the edge region. Therefore, the middle region of the field-of-view range can be naturally used as an ROI of the human eyes. However, in embodiments of this application, because the sub-region groups formed by all the optical signals overlap in the region close to the middle of the field-of-view range, the detection apparatus consumes more resources in the middle region of the field-of-view range. It may be considered as that the detection apparatus focuses on the middle region of the field-of-view range, so that a function similar to that of the human eyes is implemented during detection, and the detection apparatus has an intelligent attribute.

A vehicle sensing scenario is used as an example. For a detection apparatus configured in a vehicle, a region above a field-of-view range of the detection apparatus is usually the sky, and a region below the field-of-view range is usually a traveling road. Therefore, a middle region of the field-of-view range is usually an ROI (including a preceding vehicle, a neighboring vehicle, a pedestrian, or the like) in a traveling process of the vehicle. However, a resolution of the region of interest is improved, so that detection precision for the middle region can be improved, to improve driving safety of the vehicle. Especially, for an intelligent driving system, a higher resolution of a ROI is more conducive to correct decision-making of the intelligent driving system, to improve safety and comfort of the intelligent driving system.

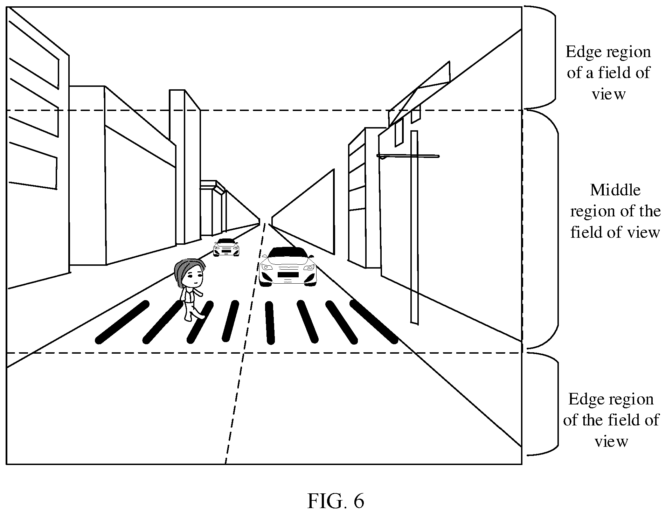

FIG. 6 is a possible diagram of the field-of-view range of the detection apparatus according to an embodiment of this application. An edge region above a field of view of the detection apparatus includes the sky, a building, and the like, an edge region below the field of view of the detection apparatus is a ground road, and a middle region of the field of view includes a pedestrian, a preceding vehicle, a facility beside a lane, and the like. According to this embodiment of this application, the detection apparatus can scan a middle region of a detection region (namely, the field of view) a plurality of times, to improve detection precision for the middle region, and enable a detection result of the middle region to be more reliable. If detection data obtained through scanning is used for intelligent driving (or assisted driving), a more reliable detection result of the middle region is more likely to make a correct decision by the intelligent driving system (or an assisted driving system) is more, to improve safety and comfort of the intelligent driving system.

The following describes some possible designs of embodiments of this application based on the embodiment shown in FIG. 2. It should be noted that the following plurality of designs may be independently implemented, or may be implemented in combination. For a combination, details are not described in embodiments of this application again.

(Design 1)

In a possible design, a pointing angle (a second angle) of a sub-region group in a first direction is greater than an interval (a first angle) between sub-region groups. Therefore, the sub-region group overlaps a next adjacent sub-region. An angle of an overlapping region between a first sub-region group (a sub-region group that is described as an example for ease of description) and the next adjacent sub-region group is a difference between the second angle and the first angle. For example, FIG. 3 is used as an example. The second angle is $\gamma°$, and the first angle is $\delta°$. In this case, an overlapping angle between a 1st sub-region group and a 2nd sub-region group is $(\gamma - \delta)°$. The overlapping part is a part that is scanned a plurality of times, and the overlapping part is equivalently detected the plurality of times. This improves a resolution of a detection result.

In some possible implementations, the sub-region group is formed through scanning of a plurality of channels. Therefore, the sub-region group also overlaps last j adjacent sub-region groups, where j < M. In this case, an angle of an overlapping region between an $i^{th}$ sub-region group and an $(i+j)^{th}$ sub-region group is a difference between the second angle (which is represented as $Q_{ij}$ in the following for ease of description) and the first angle multiplied by j, where i and j are integers, $0 < j < M$, $0 < i < N$, and $i + j \leq N$. That is, $Q_{ij}$ satisfies the following formula:

$$Q_{ij} = (\gamma - j\delta)°.$$

As shown in FIG. 3, between the 1st sub-region group and a 3rd sub-region group, a sub-region a3 overlaps a sub-region c1, and a sub-region a4 overlaps a sub-region c2. Sub-regions are sequentially arranged, so that quantities of overlapping times sequentially increase from an edge of the field-of-view range to the middle of the field-of-view range, to increase a resolution of a middle region the field-of-view range. In addition, in this application, a region whose resolution is improved is related to a quantity of channels, a channel pointing angle, and a quantity of optical signals. Therefore, required resolution distribution can be designed based on the quantity of channels, the channel pointing angle, and the quantity of optical signals, to better meet a user requirement.

It should be noted that, when the sub-regions overlap, the overlapping sub-regions may completely overlap, or may not completely overlap (or may partially overlap). It should be noted that, in a specific implementation process, an overlapping status of the sub-regions may be further affected by motion or vibration of the detection apparatus, or precision of the detection apparatus, or the pointing angle between the channels.

(Design 2)

In another possible design, in a first direction, a resolution within the field-of-view range increases in ascending order from an edge to the middle.

Because sub-region groups formed by the M channels are sequentially arranged at intervals in the first direction, a middle region of the field-of-view range may be separately scanned by signals of a plurality of channels. Correspondingly, a receiving module receives a return signal from the scanned middle region of the field-of-view range a plurality of times, so that a resolution of the middle region of the field-of-view range is higher than resolutions of two sides (in the first direction) of the field-of-view range.

Further, because adjacent sub-regions sequentially overlap, quantities of times that the sub-region is scanned sequentially increase from the two sides of the field-of-view range to the middle of the field-of-view range. For example, a quantity of times that a middle region of the field-of-view range shown in FIG. 5A and FIG. 5B is scanned are greater than a quantity of times that an edge region of the field-of-view range is scanned. For an optical signal including four channels, quantities of scanning times are four times, three times, two times, and one time separately from the middle region of the field-of-view range to the edge of the field-of-view range.

Correspondingly, resolutions within the field-of-view range also sequentially increase from the two sides of the field-of-view range to the middle of the field-of-view range. Therefore, according to embodiments of this application, gradient control of the resolution can be implemented, and resolution distribution similar to that of human eye visual observation is formed. This meets a requirement on detection precision in the fields such as autonomous driving and intelligent surveying and mapping.

Further, in the first direction, the resolution of the middle region of the field-of-view range is M-fold a resolution of an edge portion of the field-of-view range.

Specifically, the middle region of the field-of-view range may be separately scanned by signals of M channels (that is, the middle region of the field-of-view range is scanned M times). Correspondingly, the receiving module receives the return signal from the scanned middle region of the field-of-view range the plurality of times (for example, the M times), so that the resolution of the middle region of the field-of-view range is M-fold the resolution of the edge portion of the field-of-view range. In this way, detection precision for the middle region of the field-of-view range is greatly improved, and energy utilization and system resource utilization are improved.

(Design 3)

In still another possible design, in a first direction, an optical signal pointing angle of each of the M channels is a third angle, and the third angle is the same as a first angle. In this case, an interval between sub-regions is exactly consistent with an included angle between the channels, and when the optical signal is received, locations of sub-regions in one sub-region group are consecutive, so that an error that occurs duration combination of a field of view when the signal is received can be reduced, and detection precision can be improved.

(Design 4)

In still another possible design, in a first direction, an optical signal pointing angle of each of the M channels is a third angle, and the third angle satisfies: The third angle = a first angle + $\beta$, where $\beta > 0°$. Because there is a difference of $\beta$ between a pointing angle between the channels and a first angle, two times of scanning in an overlapping region are interleaved, to increase point cloud density and improve a resolution of the overlapping region.

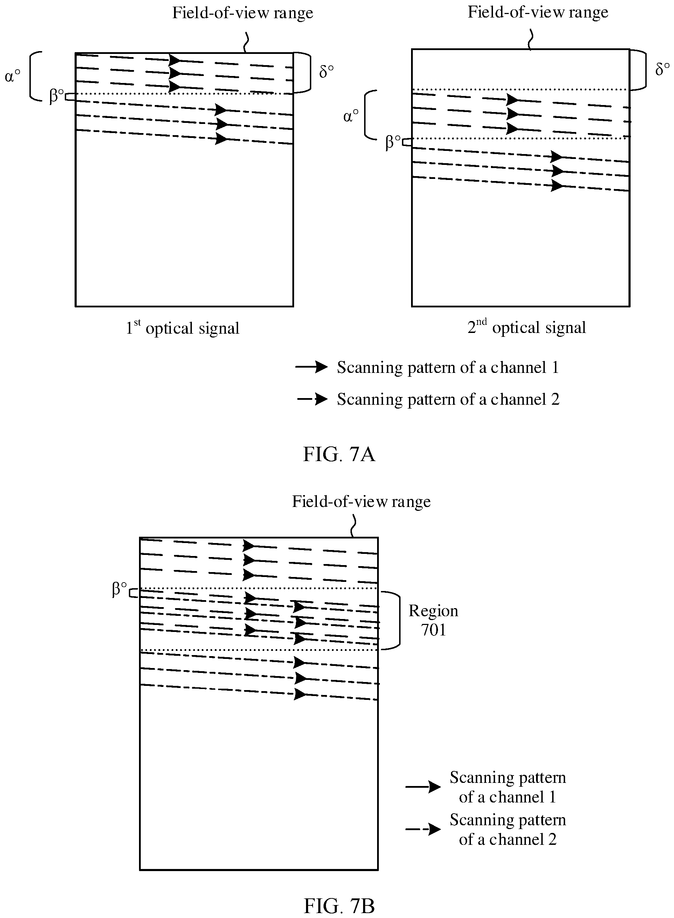

For example, FIG. 7A is a possible diagram of a scanning pattern according to an embodiment of this application. FIG. 7A is a scanning diagram of an optical signal including two channels. During scanning by a 1st optical signal, an angle scanned by a channel 1 is the first angle (namely, $\delta°$ shown in FIG. 7A), and pointing angles of the channel 1 and a channel 2 are the third angle (namely, $\alpha°$ shown in FIG. 7A). As shown in FIG. 7A, there is a difference angle (namely, $\beta°$ shown in FIG. 7A) between the third angle and the first angle. However, during scanning by a 2nd optical signal, because the different angle is designed, a scanning pattern of the channel 1 is interleaved with a scanning pattern of the channel 2 during scanning by the 1st optical signal. In other words, the center (or another reference point) of the scanning pattern of the channel 1 is located in a "gap" of the center of the scanning pattern of the channel 2. FIG. 7B is a possible diagram of scanning pattern interleaving according to an embodiment of this application.

The difference angle is designed, so that signals of a plurality of channels are interleaved in a region 701.

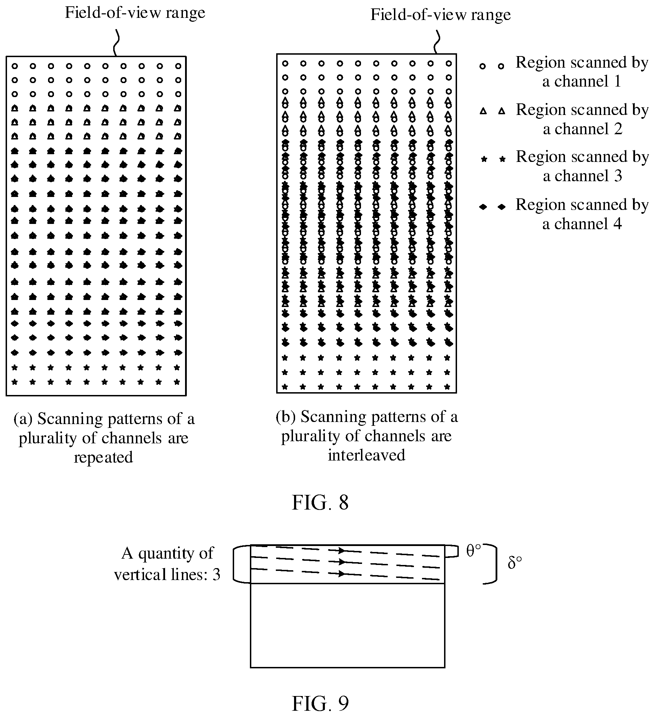

This increases point cloud density and improves the resolution of the overlapping region. For example, FIG. 8 is a diagram of a scanning pattern of an optical signal including four channels according to an embodiment of this application. As shown in (a) in FIG. 8, when scanning patterns of a plurality of channels are repeated, the scanning patterns of the plurality of channels overlap (overlap), so that improvement of a resolution is not clear. However, as shown in (b) in FIG. 8, the angle difference between the channels is designed, an overlap (overlap) of the scanning patterns can be reduced, irregularity of a point cloud can be improved, point cloud density can be increased, and the resolution of the overlapping region can be improved.

It should be understood that a quantity of channels and a quantity of optical signals shown in FIG. 7A, FIG. 7B, and FIG. 8 are merely examples. In a specific implementation process, the quantity of channels and the quantity of optical signals may be set based on a requirement. Further, the difference angle between the channels may alternatively be designed in advance, or may be adjusted based on a requirement.

(Design 5)

In a possible design, a signal of one channel in one optical signal forms K scanning lines in one sub-region. That is, a quantity of vertical lines of a transmitting signal in one subframe is K. An angle of each of the K scanning lines in a first direction is a fourth angle, where K is an integer and K > 0.

Optionally, all the K scanning lines also have a same location in a second direction. Alternatively, because a transmission delay may be set between the channels, locations of all the K scanning lines in a second direction are in a same location range.

For example, FIG. 9 is a possible diagram of the scanning line according to an embodiment of this application. For example, the detection apparatus may perform two-dimensional scanning. In one optical signal, the K scanning lines are formed by adjusting the detection apparatus, and an angle at which the scanning lines pass through during scanning in the first direction is the fourth angle (namely, $\theta°$ shown in FIG. 9). Correspondingly, an angle (in the first direction) at which the K scanning lines of the optical signal pass through during scanning is $(K \times \theta)°$.

After scanning on the K scanning lines, the detection apparatus enters scanning of a next optical signal (or a next subframe). Therefore, in some possible implementations, an interval between centers of sub-regions in the first direction is $(K \times \theta)°$, that is, the first angle = K × the fourth angle.

In the foregoing design, because the scanning lines are spaced by a same angle in the first direction, a region formed through scanning has a regular shape, complexity of field-of-view combination is reduced, and detection precision is improved.

(Design 6)

A signal of one channel in one optical signal forms K scanning lines in one sub-region, and a scanning module may control a scanning speed of the scanning line.

In a possible solution, in a first direction, a scanning form of a 1st scanning line of a 1st optical signal in the N optical signals is accelerated scanning followed by decelerated scanning. A scanning form of a Kth scanning line of an Nth optical signal in the N optical signals is accelerated scanning followed by decelerated scanning. A scanning form of a 2nd scanning line to a Kth scanning line of the 1st optical signal is constant-speed scanning, a scanning form of a 2nd optical signal to an (N-1)th optical signal in the N optical signals is constant-speed scanning, and a scanning form of a 1st scanning line to a (K-1)th scanning line of an Nth optical signal in the N optical signals is constant-speed scanning.

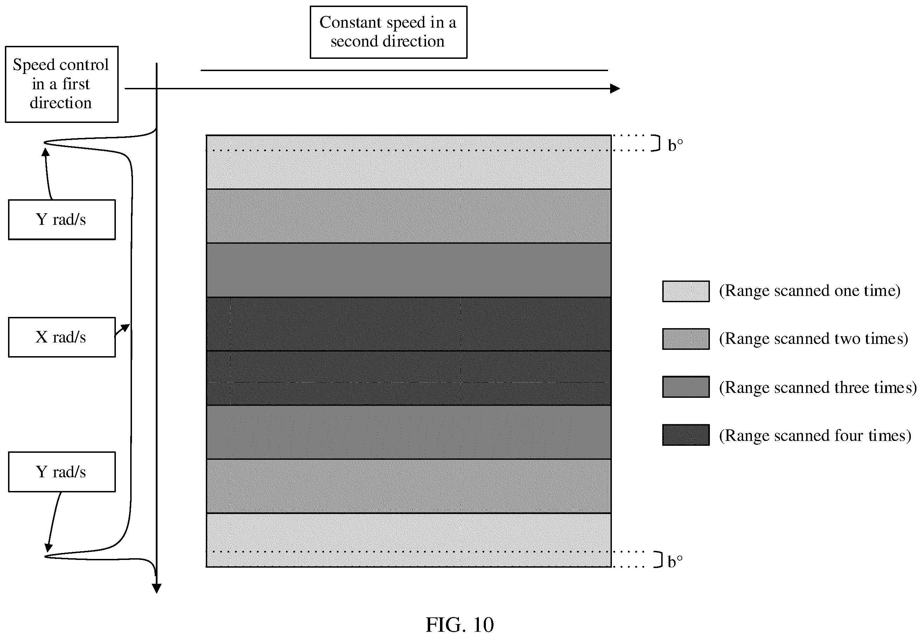

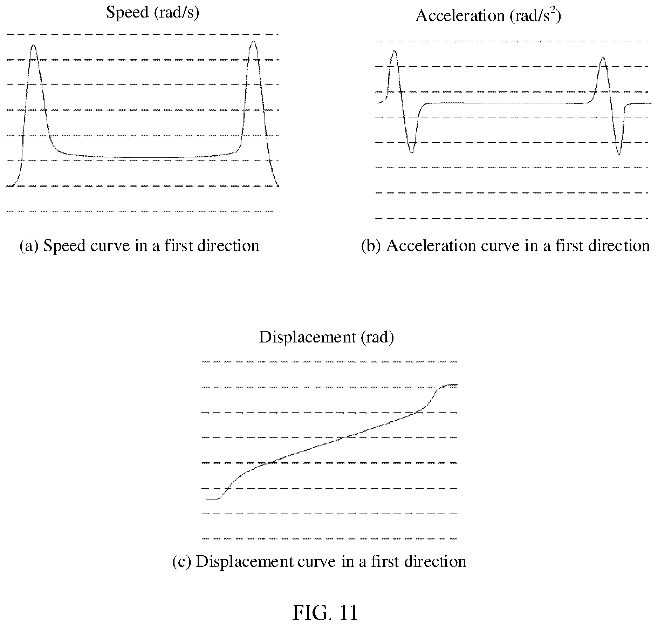

For example, refer to FIG. 10 and FIG. 11. FIG. 10 is a possible diagram of a scanning speed change according to an embodiment of this application. FIG. 11 shows a speed (a unit of the speed is radian per second, namely, rad/s) curve, an acceleration curve, and a displacement curve in the first direction according to an embodiment of this application. It can be learned that, in a second direction, the scanning module maintains constant-speed scanning. In the first direction, when a range of first b° is scanned, the scanning speed increases first and then decreases, and subsequently constant-speed scanning is maintained; and when a range of last b° is scanned, the scanning speed also increases first and then decreases, as shown in the speed curve in (a) in FIG. 11.

In a possible implementation solution, a 1st scanning line of the channel is used to scan the range of the first b°, and a last scanning line of the channel is used to scan the range of the last b°. Therefore, on both the 1st scanning line and the last scanning line in the field-of-view range, scanning is performed in a form of acceleration followed by deceleration. To be specific, on the 1st scanning line and the last scanning line, time spent in scanning a same angle is the same as time spent in scanning another scanning line, and an expected speed is reached after scanning on one scanning line is completed. This facilitates scanning in a next field-of-view range and improving detection efficiency.

For example, at the last scanning line, the scanning module may need to flip or stop (to facilitate scanning in the next field-of-view range), that is, a target speed Vt is 0, and an initial speed V0 of the scanning module is v. The scanning speed needs to decrease from v to 0, but time spent in scanning the same angle needs to be consistent. Therefore, scanning is performed in the form of acceleration followed by deceleration, to improve detection efficiency. Specifically, as shown in (b) and (c) in FIG. 11, the same angle may be scanned in same time through acceleration followed by deceleration, and the initial speed and a final speed may change, so that scanning in a next field-of-view range is performed, and detection efficiency is improved.

In addition, constant-speed scanning is performed in the second direction, and most scanning lines still perform constant-speed scanning in the first direction. This solves problems of a limited quantity of field-of-views for combination, angle jump (jump), and speed stability in a scanning system.

(Design 7)

In a possible design, the detection apparatus in this embodiment of this application further includes a receiving module, for example, the receiving module in the embodiment shown in FIG. 1. The receiving module may receive N return signals, where each return signal includes a reflected signal corresponding to one optical signal. Further, the receiving module performs field-of-view combination based on the N return signals, to obtain detection data of the field-of-view range.

Optionally, the detection data may be point cloud data corresponding to the field-of-view range. Alternatively, optionally, the detection data may include one or more of a distance, an orientation, a corresponding pixel region, a height, a speed, a posture, shape information, and the like of a target in the field-of-view range.

Because scanning signals overlap in a middle region of the field-of-view range, correspondingly, sub-region groups corresponding to the return signals also overlap in the middle region of the field-of-view range. In the obtained detection data, point cloud density of the middle region of the field-of-view range is higher than point cloud density of an edge region of the field-of-view range. This improves detection accuracy of a sub-region in the middle of a detection region and improves detection performance.

In a specific embodiment, the receiving module may include a detector and a processor. The detector may receive return signals from N sub-region groups, and output electrical signals. The processor may combine the electrical signals based on a location relationship between the sub-region groups and fields of view of the sub-region groups, to obtain the detection data of the field-of-view range. The detector and the processor herein may be independent or integrated.

It should be understood that, in embodiments of this application, for ease of describing a computing function, an apparatus having a computing function is described as a processor. In a specific implementation process, the processor may include one or more of the following apparatuses: a central processing unit (central processing unit, CPU), an application processor (application processor, AP), a time-to-digital converter (Time-to-Digital Converter, TDC), a filter, a graphics processing unit (graphics processing unit, GPU), a microprocessor unit (microprocessor unit, MPU), an application-specific integrated circuit (Application-Specific Integrated Circuit, ASIC), an image signal processor (image signal processor, ISP), a digital signal processor (digital signal processor, DSP), a field programmable gate array (Field Programmable Gate Array, FPGA), a complex programmable logic device (Complex programmable logic device, CPLD), a coprocessor (assisting the central processing unit in completing corresponding processing and application), a microcontroller unit (Microcontroller Unit, MCU), a neural-network processing unit (neural-network processing unit, NPU), and/or the like.

Optionally, the processor may be located inside the detection apparatus, or may be located outside the detection apparatus. Alternatively, in some designs, the processor may include a plurality of components, some components are located inside the detection apparatus, and some components are located outside the detection apparatus. For example, a processing apparatus may include a digital-to-analog conversion module, a filtering module, a de-TOF module, and a point cloud generation module. The digital-to-analog conversion module, the filtering module, and the de-TOF module are located inside the detection apparatus, and the point cloud generation module is located outside the detection apparatus.

(Design 8)

When a light source transmits an optical signal, a transmission delay may be designed, where the transmission delay is an offset between time at which the light source transmits the optical signal and a preset light emitting moment.

Optionally, the preset light emitting moment may be set in a plurality of manners. This is not limited in this application.

For example, the preset light emitting moment may be implemented by using a preset light emitting moment of a reference channel. Specifically, a reference channel is preset in a plurality of channels, a light emitting moment of the reference channel is used as a first moment, and an offset between a remaining channel and the reference channel may be considered as the transmission delay.

For another example, the preset light emitting moment may be a start moment of a subframe. In this case, the subframe is obtained through pre-division and has a fixed periodicity, and an offset between the light emitting moment of the light source and the start moment of the subframe is the transmission delay.

In a possible solution, a first optical signal in the N optical signals is used as an example. A transmission delay of the first optical signal is first duration. The first duration satisfies: The first duration = P × 1/PRF, where PRF is a pulse repetition frequency of the detection apparatus, P is a delay coefficient, and a value range of P is (0, 1]; or the first duration is 0.

In this embodiment of this application, the transmission delay may be adjusted by using the delay coefficient P, to implement designs of different resolutions for different regions. For example, different values of P are designed in different optical signals, so that scanning lines of different channels are staggered, to further improve a resolution and detection precision.

In another possible solution, different transmission delays may alternatively be designed between different channels of a same optical signal, to implement interleaving of scanning lines.

(Design 9)

In a possible design, the detection apparatus may determine a first target or a first region based on detection data of a previous frame or several frames. The first target (or the first region) herein is a target (or a region) that the detection apparatus is interested in.

For example, in subsequent detection, according to this embodiment of this application, a first object or a first target region may be focused on for collection. For example, when the first target (or the first region) is located in a center region of the field-of-view range, point cloud can become dense for the first target (or the first region), to improve detection precision.

For another example, point cloud data of the first target (or the first region) is tracked, and/or a detection-related parameter of a range in which the first target (or the first region) is located is adjusted, to improve detection precision for the first target (or the first region).

An embodiment of this application further provides a lidar. The lidar includes a transmitting module, a scanning module, a receiving module, and a control module. The transmitting module is configured to generate N optical signals. The receiving module is configured to receive a return optical signal (including a return signal). The control module is configured to control the scanning module, so that the lidar implements the foregoing scanning method, for example, the scanning method shown in FIG. 2, and one or more possible designs of the scanning method shown in FIG. 2.

An embodiment of this application further provides a terminal. The terminal includes the foregoing detection apparatus, for example, the detection apparatus 10. The terminal (or specifically, a detection apparatus in the terminal) is configured to implement the foregoing scanning method, for example, the scanning method shown in FIG. 2, and one or more possible designs of the scanning method shown in FIG. 2.

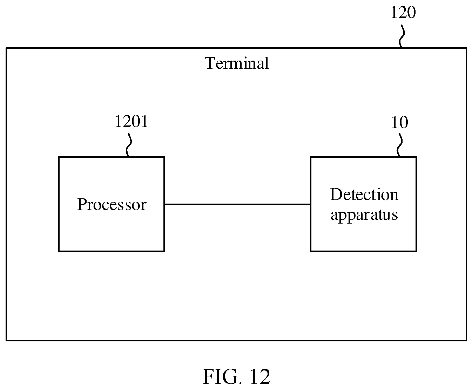

FIG. 12 is a diagram of a possible structure of a terminal 120 according to an embodiment of this application. The terminal 120 includes a processor 1201 and the foregoing detection apparatus 10. The processor and the detection apparatus may be connected to or communicate with each other. A specific implementation of the connection or communication is not limited in embodiments of this application.

The detection apparatus is configured to implement the foregoing scanning method. For details, refer to the embodiment shown in FIG. 2 or a possible design thereof. Details are not described herein again.

The processor is configured to obtain detection data about a field-of-view range based on a return signal received by a detector of the detection apparatus 10. The detection data may be specifically point cloud data corresponding to the field-of-view range, or the detection data may include one or more of a distance and an orientation of a target, a pixel region occupied by the target, and a height, a speed, a posture, shape information, or the like of the target in the field-of-view range.

Optionally, the processor 1201 is a module that performs an arithmetic operation and/or a logical operation, and may specifically include one or more of the following apparatuses: a CPU, an AP, a TDC, a filter, a GPU, an MPU, an ASIC, an ISP, a DSP, an FPGA, a CPLD, a coprocessor, an MCU, an NPU, and/or the like.

Optionally, the foregoing terminal may include a mobile platform or a transportation tool like a vehicle, a ship, an airplane, a train, a spacecraft, an uncrewed aerial vehicle, or a robot.

In the descriptions of this application, the terms "center", "on", "below", "vertical", "horizontal", "inside", "outside", and the like are orientation or location relationships based on the accompanying drawings, and are merely intended for ease of describing this application and simplifying description, but do not indicate or imply that a described apparatus or element needs to have a specific orientation or needs to be construed and operated in a specific orientation. Therefore, such terms should not be understood as a limitation on this application.

In the descriptions of this application, it should be noted that, unless otherwise clearly specified and limited, the term "connection" should be understood in a broad sense, for example, may be a fixed connection, or may be a detachable connection, or may further be an abutting connection or an integrated connection. A person of ordinary skill in the art may understand specific meanings of the foregoing terms in this application based on specific cases.

In embodiments of this application, a term like "example" or "for example" is used to represent giving an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a related concept in a specific manner.

In embodiments of this application, "at least one" means one or more, and "a plurality of" means two or more. At least one of the following items (pieces) or a similar expression thereof means any combination of these items, including any combination of singular items (pieces) or plural items (pieces). For example, at least one of a, b, or c may indicate a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between associated objects.

In addition, unless otherwise stated, ordinal numbers such as "first" and "second" in embodiments of this application are for differentiation between a plurality of objects, but are not intended to limit an order, a time sequence, priorities, or importance of the plurality of objects. For example, a first optical signal and a second optical signal are merely for ease of description, but do not indicate differences in sources, sequences, importance, and the like of the first optical signal and the second optical signal. In some embodiments, the first optical signal and the second optical signal may alternatively be a same optical signal.

According to the context, the term "when" used in the foregoing embodiments may be interpreted as a meaning of "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

**Claims**

1. A scanning method, wherein the method comprises:

   generating N optical signals, wherein the optical signal comprises M channels, N is an integer and N > 1, and M is an integer and M > 0; and
   adjusting a scanning module to change a propagation direction of the N optical signals, wherein the N optical signals are obtained through N times of transmission, the N optical signals correspond to N sub-region groups in a field-of-view range, center locations of the N sub-region groups are sequentially spaced by a first angle in a first direction, and the N sub-region groups have a same location in a second direction, wherein
   one sub-region group comprises M sub-regions, the M sub-regions correspond to the M channels, a pointing angle of one sub-region group in the first direction is a second angle, and the second angle is greater than the first angle.

2. The method according to claim 1, wherein in the N sub-region groups, an angle of an overlapping region between a first sub-region group and a next adjacent sub-region group is a difference between the second angle and the first angle.

3. The method according to claim 1 or 2, wherein in the first direction, a resolution of a middle region within the field-of-view range is M-fold a resolution of an edge portion of the field-of-view range.

4. The method according to any one of claims 1 to 3, wherein in the first direction, an optical signal pointing angle of each of the M channels is a third angle, and the third angle is the same as the first angle.

5. The method according to any one of claims 1 to 4, wherein a signal of one channel in one optical signal forms K scanning lines in one sub-region, an angle of each of the K scanning lines in the first direction is a fourth angle, and all the K scanning lines have a same location in the second direction, wherein K is an integer and K > 0, wherein
   the first angle = K $\times$ the fourth angle.

6. The method according to claim 5, wherein a signal of one channel in one optical signal forms K scanning lines in one sub-region;

   in the first direction, a scanning form of a $1^{st}$ scanning line of a $1^{st}$ optical signal in the N optical signals is accelerated scanning followed by decelerated scanning;
   a scanning form of a $K^{th}$ scanning line of an $N^{th}$ optical signal in the N optical signals is accelerated scanning followed by decelerated scanning;
   a scanning form of a $2^{nd}$ scanning line to a $K^{th}$ scanning line of the $1^{st}$ optical signal is constant-speed scanning;
   a scanning form of a $2^{nd}$ optical signal to an $(N-1)^{th}$ optical signal in the N optical signals is constant-speed scanning; and
   a scanning form of a $1^{st}$ scanning line to a $(K-1)^{th}$ scanning line of the $N^{th}$ optical signal in the N optical signals is constant-speed scanning.

7. The method according to any one of claims 1 to 6, wherein the method further comprises:

   receiving N return signals, wherein each return signal comprises a reflected signal corresponding to one optical signal; and
   performing field-of-view combination based on the N return signals, to obtain detection data of the field-of-view range.

8. The method according to any one of claims 1 to 7, wherein the N optical signals comprise a first optical signal; and

a transmission delay of the first optical signal is first duration, and the transmission delay is an offset between time at which a light source transmits an optical signal and a preset light emitting moment; and the first duration satisfies:

the first $$\text{duration} = P \times \frac{1}{\text{PRF}}$$ , wherein PRF is a pulse repetition frequency of a detection apparatus, P is a delay coefficient, and a value range of P is (0, 1]; or
the first duration is 0.

9. A detection apparatus, wherein the detection apparatus comprises a light source and a scanning module, wherein

the light source is configured to generate N optical signals, wherein the optical signal comprises M channels, N is an integer and N > 1, and M is an integer and M > 0; and
the scanning module is configured to change a propagation direction of the N optical signals, wherein the N optical signals are obtained through N times of transmission, the N optical signals correspond to N sub-region groups in a field-of-view range, center locations of the N sub-region groups are sequentially spaced by a first angle in a first direction, and the N sub-region groups have a same location in a second direction, wherein
one sub-region group comprises M sub-regions, the M sub-regions correspond to the M channels, a pointing angle of one sub-region group in the first direction is a second angle, and the second angle is greater than the first angle.

10. The apparatus according to claim 9, wherein in the N sub-region groups, an angle of an overlapping region between a first sub-region group and a next adjacent sub-region group is a difference between the second angle and the first angle.

11. The apparatus according to claim 9 or 10, wherein in the first direction, a resolution of a middle region within the field-of-view range is M-fold a resolution of an edge portion of the field-of-view range.

12. The apparatus according to any one of claims 9 to 11, wherein in the first direction, an optical signal pointing angle of each of the M channels is a third angle, and the third angle is the same as the first angle.

13. The apparatus according to any one of claims 9 to 12, wherein a signal of one channel in one optical signal forms K scanning lines in one sub-region, an angle of each of the K scanning lines in the first direction is a fourth angle, and all the K scanning lines have a same location in the second direction, wherein K is an integer and K > 0, wherein
the first angle = K $\times$ the fourth angle.

14. The apparatus according to claim 13, wherein a signal of one channel in one optical signal forms K scanning lines in one sub-region;

in the first direction, a scanning form of a 1st scanning line of a 1st optical signal in the N optical signals is accelerated scanning followed by decelerated scanning;
a scanning form of a Kth scanning line of an Nth optical signal in the N optical signals is accelerated scanning followed by decelerated scanning;
a scanning form of a 2nd scanning line to a Kth scanning line of the 1st optical signal is constant-speed scanning;
a scanning form of a 2nd optical signal to an (N-1)th optical signal in the N optical signals is constant-speed scanning; and
a scanning form of a 1st scanning line to a (K-1)th scanning line of the Nth optical signal in the N optical signals is constant-speed scanning.

15. The apparatus according to any one of claims 9 to 14, wherein the apparatus further comprises a receiving module and a processing module, the receiving module is configured to receive N return signals, and each return signal comprises a reflected signal corresponding to one optical signal; and
the processing module is configured to perform field-of-view combination based on the N return signals, to obtain detection data of the field-of-view range.

16. The apparatus according to any one of claims 9 to 15, wherein the N optical signals comprise a first optical signal; and
a transmission delay of the first optical signal is first duration, the transmission delay is an offset between time at which the light source transmits an optical signal and a preset light emitting moment, and the first duration satisfies:

the first $$\text{duration} = P \times \frac{1}{\text{PRF}}$$ , wherein PRF is a pulse repetition frequency of the detection apparatus, P is a delay coefficient, and a value range of P is (0, 1]; or
the first duration is 0.

17. A lidar, wherein the lidar comprises a transmitting module, a scanning module, a receiving module, and a control module, wherein the transmitting module is configured to generate N optical signals, the receiving module is configured to receive a return signal, and the control module is configured to control the scanning module, so that the lidar implements the method according to any one of claims 1 to 8.

18. A terminal, wherein the terminal comprises the detection apparatus according to any one of claims 9 to 16, or the terminal comprises the detection radar according to claim 17.

Detection apparatus 10

101

102

Transmitting module

Scanning module

FIG. 1

S201: A detection apparatus generates N optical signals

S202: The detection apparatus adjusts a scanning module to change a propagation direction of the N optical signals

FIG. 2

FIG. 3

FIG. 4

(Range scanned one time )
(Range scanned two times)
(Range scanned three times)
(Range scanned four times)
(Range scanned three times)
(Range scanned two times)
(Range scanned one time)

1st optical signal
2nd optical signal
3rd optical signal
4th optical signal
5th optical signal

Region scanned by a first channel
Region scanned by a second channel
Region scanned by a third channel
Region scanned by a fourth channel

FIG. 5A

(Range scanned one time)
(Range scanned two times)
(Range scanned three times)
(Range scanned four times)
(Range scanned three times)
(Range scanned two times)
(Range scanned one time)

FIG. 5B

Edge region
of a field of
view

Middle
region of the
field of view

Edge region
of the field of
view

FIG. 6

Field-of-view range

α° β° δ°

1st optical signal

Field-of-view range

α° β° δ°

2nd optical signal

→ Scanning pattern of a channel 1

→ Scanning pattern of a channel 2

FIG. 7A

Field-of-view range

β°

Region 701

→ Scanning pattern of a channel 1

→ Scanning pattern of a channel 2

FIG. 7B

Field-of-view range

Field-of-view range

o o Region scanned by
a channel 1

△ △ Region scanned by
a channel 2

★ ★ Region scanned by
a channel 3

◆ ◆ Region scanned by
a channel 4

(a) Scanning patterns of a
plurality of channels are
repeated

(b) Scanning patterns of a
plurality of channels are
interleaved

FIG. 8

A quantity of
vertical lines: 3

θ°

δ°

FIG. 9

FIG. 10

Speed (rad/s)

Acceleration (rad/s$^2$)

(a) Speed curve in a first direction

(b) Acceleration curve in a first direction

Displacement (rad)

(c) Displacement curve in a first direction

FIG. 11

120

Terminal

1201                                        10

Processor          Detection
apparatus

FIG. 12

## INTERNATIONAL SEARCH REPORT

| | International application No. |
|---|---|
| | **PCT/CN2022/088616** |

**A. CLASSIFICATION OF SUBJECT MATTER**

G01S 7/481(2006.01)i

According to International Patent Classification (IPC) or to both national classification and IPC

**B. FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNTXT; ENTXTC; ENTXT, DWPI; WOTXT; USTXT; EPTXT, CNKI: 激光, 雷达, 交叠, 重叠, 扫描, 分辨率, ROI, 感兴趣, 中间区域, 关注区域, 重点区域, 车辆, 驾驶, 探测, 角度, 光; Laser, Radar, LIDAR, Overlap, Scan, Resolution, ROI, Region of Interest, Intermediate, Vehicle, Driving, Detect, Angle, Light

**C. DOCUMENTS CONSIDERED TO BE RELEVANT**

| Category* | Citation of document, with indication, where appropriate, of the relevant passages | Relevant to claim No. |
|---|---|---|
| X | CN 113721256 A (TANWAY TECHNOLOGY CO., LTD.) 30 November 2021 (2021-11-30) description, paragraphs 0039-0050, and figures 1-10 | 1-18 |
| X | CN 112616318 A (SUTENG INNOVATION TECHNOLOGY CO., LTD.) 06 April 2021 (2021-04-06) description, paragraphs 0061-0103, and figures 1-10 | 1-18 |
| X | CN 108267746 A (HESAI PHOTONICS TECHNOLOGY CO., LTD.) 10 July 2018 (2018-07-10) description, paragraphs 0024-0050, and figures 1-5 | 1-18 |
| A | CN 112585492 A (INNOVUSION IRELAND LIMITED) 30 March 2021 (2021-03-30) entire document | 1-18 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 January 2023** | **12 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/088616**

| Patent document cited in search report | | | Publication date (day/month/year) | Patent family member(s) | Publication date (day/month/year) |
|---|---|---|---|---|---|
| CN | 113721256 | A | 30 November 2021 | None | |
| CN | 112616318 | A | 06 April 2021 | None | |
| CN | 108267746 | A | 10 July 2018 | None | |
| CN | 112585492 | A | 30 March 2021 | None | |

Form PCT/ISA/210 (patent family annex) (January 2015)